# EUROPÄISCHE PATENTANMELDUNG

(11) **EP 4 180 478 A1**
(43) Veröffentlichungstag der Anmeldung: **17.05.2023**
(21) Anmeldenummer: 21207890.1
(22) Anmeldetag: 12.11.2021
(51) Int. Cl.: C08G 64/00, B33Y 10/00

(54) **COPOLYCARBONAT ALS STÜTZMATERIAL IM 3D-DRUCK**

(71) Anmelder: Covestro Deutschland AG, 51373 Leverkusen (DE)
(72) Erfinder: Die Erfindernennung liegt noch nicht vor
(74) Vertreter: Davepon, Björn

(57) **Zusammenfassung**

Die vorliegende Erfindung betrifft die Verwendung hochtemperaturstabiler Copolycarbonate als lösliches Stützmaterial im 3D-Druck, vorzugsweise im FDM-Verfahren (Fused Deposition Modeling). Als Druckmaterial werden Poly(etherketonketon), Poly(etherethe-retherketon), Poly(etheretherketonketon), Poly(etherketonetherketonketon), Polyarylensulfon, Polybisphenylulfon, Polyethersulfon, Polyphenylensulfon, Polysulfon, Polyetherimid, Polyetherimid-Polycarbonat-Blend oder ein Blend enthaltend mindestens zwei der vorgenannten Polymere verwendet. Als Lösungsmittel werden vorzugsweise Butylacetat, Ethylacetat, 2-Methoxy-1-methylethylacetat, Methoxypropylacetat, Ethyl-3-ethoxypropionat, Tetrahydrofuran, Xylol, Mesitylen, Cumol, Trimethylbenzol, Benzol, Toluol, Dioxan, Tetrahydropyran oder eine Mischung enthaltend mindestens zwei der vorgenannten Lösungsmittel verwendet.

## Beschreibung

Die vorliegende Erfindung betrifft ein Verfahren zur Herstellung eines dreidimensionalen Zielobjektes mittels additiver Fertigung unter Verwendung eines Stützmaterials und ein Formteil, aufweisend eine Vielzahl von Schichten aus Stützmaterial und eine Vielzahl von Schichten aus Druckmaterial.

WO 2017/191150 A1 betrifft die Verwendung von Copolycarbonat als Stützmaterial im 3D-Druck. Als Druckmaterial werden Polyester, Polyamid, PC/Polyester-Blend und/oder Polyaryletherketon offenbart. Als Lösungsmittel zum Entfernen des Stützmaterials wird beispielsweise THF vorgeschlagen.

Aufgabe war es, weitere Druckmaterial/Stützmaterial-Kombinationen zu finden, aus denen 3D-gedruckte Objekte mit hoher Wärmeformbeständigkeit resultieren.

Überraschenderweise wurde nun gefunden, dass Zusammensetzungen auf Basis von hochtemperaturstabilem Copolycarbonat für den Einsatz als Stützmaterial im 3D-Druck (FDM), in Kombination mit bestimmten Druckmaterialien mit hohen Schmelz- bzw. Verarbeitungstemperaturen, d.h. ≥ 250 °C, bevorzugt ≥ 300 °C, insbesondere ≥ 330 °C geeignet sind. Unter "hochtemperaturstabil" wird erfindungsgemäß ein Copolycarbonat verstanden, das eine Vicat-Temperatur (VST/B 120; ISO 306:2013) von mindestens 150 °C, bevorzugt von über 150 °C, weiter bevorzugt von mindestens 175 °C, noch weiter bevorzugt von mindestens 180 °C, besonders bevorzugt von mindestens 200 °C, bevorzugt bis 230 °C, aufweist.

Ein entsprechendes Copolycarbonat ist beispielsweise unter der Bezeichnung "APEC^{®}" von der Covestro Deutschland AG erhältlich. Es handelt sich dabei um ein Copolycarbonat, enthaltend eine oder mehrere Monomereinheiten der Formel (1a) 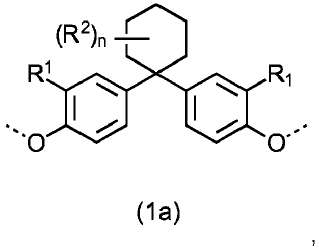 in der
R¹ für Wasserstoff oder einen C₁- bis C₄-Alkylrest, bevorzugt für Wasserstoff, steht,
R² für einen C₁- bis C₄-Alkylrest, bevorzugt Methylrest, steht,
n für 0, 1, 2 oder 3, bevorzugt 3, steht.

Alternativ handelt es sich um ein Copolycarbonat, enthaltend eine oder mehrere Monomereinheiten der Formeln (1b), (1c), (1d) und/oder (1e), welche nachfolgend gezeigt sind.

Bevorzugt enthält das Copolycarbonat aber Monomereinheiten der allgemeinen Formel (1a).

Gegenstand der Erfindung ist daher ein Verfahren zur Herstellung eines dreidimensionalen Objektes mittels additiver Fertigung, vorzugsweise Fused Deposition Modeling, unter Verwendung eines Druckmaterials und eines Stützmaterials, wobei als Stützmaterial eine Zusammensetzung auf Basis eines Copolycarbonats, das eine Vicat-Temperatur (VST/B 120), bestimmt nach ISO 306:2013, von mindestens 150 °C, bevorzugt von mehr als 150 °C, weiter bevorzugt von mindestens 175 °C und besonders bevorzugt mindestens 200 °C aufweist.

Das Copolycarbonat enthält eine oder mehrere Monomereinheiten, ausgewählt aus der Gruppe, bestehend aus den Struktureinheiten der allgemeinen Formeln (1a), (1b), (1c), (1d) 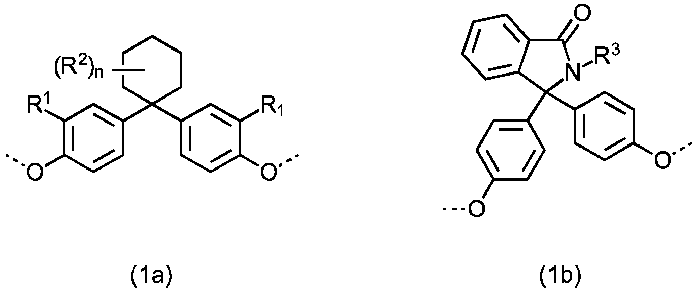 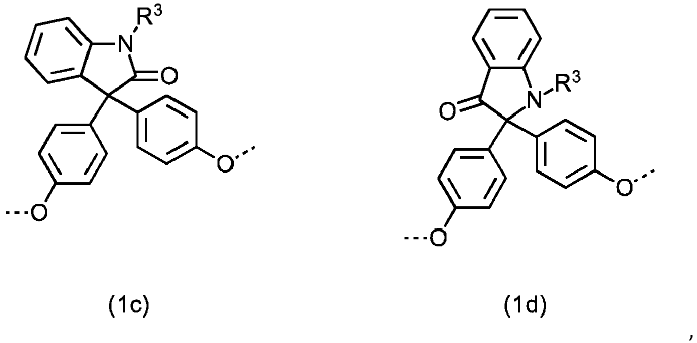 in denen
R¹ für Wasserstoff oder einen C₁- bis C₄-Alkylrest, bevorzugt für Wasserstoff, steht,
R² für einen C₁- bis C₄-Alkylrest, bevorzugt Methylrest, steht,
n für 0, 1, 2 oder 3, bevorzugt 3, steht und
R³ für einen C₁- bis C₄-Alkylrest, Aralkylrest oder Arylrest, bevorzugt für einen Methylrest oder Phenylrest, ganz besonders bevorzugt für einen Methylrest, steht,
und/oder
eine oder mehrere Monomereinheiten eines Siloxans der allgemeinen Formel (1e) 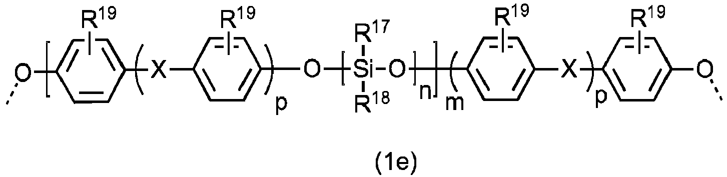 in der,
R¹⁹ für Wasserstoff, Cl, Br oder einen C₁- bis C₄-Alkylrest, vorzugsweise für Wasserstoff oder einen Methylrest, besonders bevorzugt für Wasserstoff, steht,
R¹⁷ und R¹⁸ gleich oder verschieden sind und unabhängig voneinander für einen Arylrest, einen C₁- bis C₁₀-Alkylrest oder einen C₁- bis C₁₀-Alkylarylrest, bevorzugt jeweils für einen Methylrest, stehen und wobei
X eine Einfachbindung, -CO-, -O-, ein C₁- bis C₆-Alkylenrest, ein C₂- bis Cs-Alkylidenrest, ein C₅- bis C₁₂-Cycloalkylidenrest oder ein C₆- bis C₁₂-Arylenrest ist, der optional mit weiteren aromatischen Ringen kondensiert sein kann, welche Heteroatome enthalten, wobei X bevorzugt eine Einfachbindung, ein C₁- bis Cs-Alkylenrest, ein C₂- bis Cs-Alkylidenrest, ein C₅- bis C₁₂-Cycloalkylidenrest, -O- oder -CO- ist, weiter bevorzugt eine Einfachbindung, ein Isopropylidenrest, ein C₅- bis C₁₂-Cycloalkylidenrest oder -O- ist, ganz besonders bevorzugt ein Isopropylidenrest, ist,
n eine Zahl von 1 bis 500, vorzugsweise von 10 bis 400, besonders bevorzugt von 10 bis 100, ganz besonders bevorzugt von 20 bis 60, ist,
m eine Zahl von 1 bis 10, bevorzugt von 1 bis 6, besonders bevorzugt von 2 bis 5, ist,
p 0 oder 1, bevorzugt 1, ist,
und der Wert von n mal m vorzugsweise zwischen 12 und 400, weiter bevorzugt zwischen 15 und 200 liegt,
wobei das Siloxan bevorzugt mit einem Polycarbonat in Gegenwart eines organischen oder anorganischen Salzes einer schwachen Säure mit einem pK_{A} Wert von 3 bis 7 (25 °C) umgesetzt wird,
verwendet wird.

Als Druckmaterial wird ein Poly(etherketonketon)/PEKK, Poly(etheretheretherketon)/PEEEK, Poly(etheretherketonketon)/PEEKK, Poly(etherketon-etherketonketon)/PKEKEKK, Polyarylensulfon/PAS, Polybisphenylulfon/PSF, Polyethersulfon/PES, Polyphenylensulfon/PPSU, Polysulfon/PSU, Polyetherimid/PEI, Polyetherimid-Polycarbonat-Blend/PEI-PC oder ein Blend enthaltend mindestens zwei der vorgenannten Polymere verwendet.

Das Verfahren kann somit die Schritte umfassen:
A) Herstellen eines Körpers mittels eines additiven Fertigungsverfahrens (vorzugsweise Fused Deposition Modeling) unter Verwendung des Druckmaterials und des Stützmaterials und
B) Entfernen des Stützmaterials von dem in Schritt A) erhaltenen Körper durch Auflösen des Stützmaterials mit einem Lösungsmittel.

Ein besonders geeignetes Druckmaterial ist PEI. Hier ist bevorzugt, dass die Wärmeformbeständigkeit (heat deflection temperature, HDT) gemäß ASTM D648, Methode B, bei 66 psi (pounds per square inch) in einem Bereich von ≥ 170 °C bis ≤ 220 °C liegt. Diese HDT bei 264 psi kann in einem Bereich von ≥ 170 °C bis ≤ 220 °C liegen. Die Glasübergangstemperatur gemäß ASTM D7426, Inflection Point, kann in einem Bereich von ≥ 170 °C bis ≤ 220 °C liegen.

Ein besonders bevorzugtes PEI als Druckmaterial hat eine HDT bei 66 psi von ≥ 170 °C bis ≤ 180 °C (vorzugsweise ≥ 176 °C bis ≤ 177 °C), bei 264 psi von ≥ 170 °C bis ≤ 180 °C (vorzugsweise ≥ 172 °C bis ≤ 173 °C) und eine Glasübergangstemperatur von ≥ 170 °C bis ≤ 180 °C (vorzugsweise ≥ 177 °C bis ≤ 178 °C).

Ein weiteres besonders bevorzugtes PEI als Druckmaterial hat eine HDT bei 66 psi von ≥ 210 °C bis ≤ 220 °C (vorzugsweise ≥ 214 °C bis ≤ 215 °C), bei 264 psi von ≥ 210 °C bis ≤ 220 °C (vorzugsweise ≥ 212 °C bis ≤ 213 °C) und eine Glasübergangstemperatur von ≥ 205 °C bis ≤ 215 °C (vorzugsweise ≥ 209 °C bis ≤ 210 °C).

Gemäß einer Ausführungsform wird, sofern ein Copolycarbonat mit Monomereinheiten der Formel (1b), (1c), (1d) und/oder (1e)verwendet wird, als Lösungsmittel zum Entfernen des Stützmaterials THF (Tetryhydrofuran), alleine oder in Mischung, verwendet. Dieses gilt auch, sofern das Copolycarbonat Monomereinheiten der Formel (1a)enthält und die Vicat-Temperatur (VST/B120), bestimmt nach ISO 306:2013, unter 175 °C beträgt.

Bezüglich der Herstellung der Copolycarbonate wird auf WO 2017/191150 A1 und die dort zitierte Literatur verwiesen.

Unter Polycarbonaten und Copolycarbonaten werden erfindungsgemäß insbesondere aromatische Polycarbonate bzw. Copolycarbonate verstanden.

**Ci- bis C₄-Alkyl** steht im Rahmen der Erfindung beispielsweise für Methyl, Ethyl, n-Propyl, iso-Propyl, n-Butyl, sec.-Butyl, tert.-Butyl, **Ci- bis C₆-Alkyl** darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, **Ci- bis C₁₀-Alkyl** darüber hinaus beispielsweise für n-Heptyl und n-Octyl, Pinakyl, Adamantyl, die isomeren Menthyle, n-Nonyl, n-Decyl, **C₁- bis C₃₄-Alkyl** darüber hinaus beispielsweise für n-Dodecyl, n-Tridecyl, n-Tetradecyl, n-Hexadecyl oder n-Octadecyl. Gleiches gilt für den entsprechenden Alkylrest beispielsweise in Aralkyl- bzw. Alkylaryl-, Alkylphenyl- oder Alkylcarbonylresten. Alkylenreste in den entsprechenden Hydroxyalkyloder Aralkyl- bzw. Alkylarylresten stehen beispielsweise für die den vorangehenden Alkylresten entsprechenden Alkylenreste.

**Arylrest** steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für **C₆**- **bis C₃₄-Aryl** sind Phenyl, o-, p-, m-Tolyl, Naphthyl, Phenanthrenyl, Anthracenyl oder Fluorenyl.

**Arylalkyl** bzw. **Aralkyl** bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Die vorangehenden Aufzählungen sind beispielhaft und nicht als Limitierung zu verstehen.

Unter "Zusammensetzungen auf Basis von Copolycarbonat" werden im Sinne der vorliegenden Erfindung solche Zusammensetzungen verstanden, welche mindestens 50 Gew.-% Copolycarbonat, bevorzugt mindestens 60 Gew.-%, besonders bevorzugt mindestens 75 Gew.-%, ganz besonders bevorzugt mindestens 85 Gew.-% Copolycarbonat enthalten. Es werden hierunter auch die Copolycarbonate ohne weitere Additive verstanden. Hinsichtlich der Additive, die in den Zusammensetzungen auf Basis von Copolycarbonat enthalten sein können, gilt dasselbe wie an späterer Stelle zu den Druckmaterial-Zusammensetzungen beschrieben.

Die Monomereinheit(en) der allgemeinen Formel (1a)führt man über ein oder mehrere entsprechenden Diphenole der allgemeinen Formel (1a') ein: 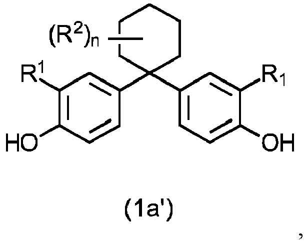 in der
R¹ für Wasserstoff oder einen C₁- bis C₄-Alkylrest, bevorzugt Wasserstoff,
R² für einen C₁- bis C₄-Alkylrest, bevorzugt einen Methylrest, und
n für 0, 1, 2 oder 3, bevorzugt 3, stehen.

Die Diphenole der Formel (la') und ihr Einsatz in Homopolycarbonaten sind in der Literatur bekannt (DE 3918406 A1).

Besonders bevorzugt ist 1,1-Bis-(4-hydroxyphenyl)-3,3,5-trimethylcyclohexan (Bisphenol TMC) mit der Formel (1a"):

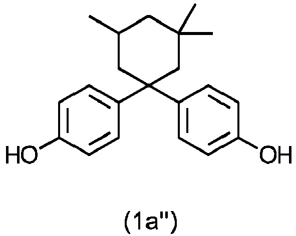

Die Copolycarbonate mit Monomereinheiten der allgemeinen Formeln (1b), (1c) und/oder (1d) weisen eine hohe Wärmeformbeständigkeit und eine geringe thermische Schwindung auf. Die Vicat-Temperatur bei erfindungsgemäß eingesetzten Copolycarbonaten liegt üblicherweise zwischen 175 °C und 230 °C.

Die Monomereinheit(en) der allgemeinen Formel (1b), (1c) und/oder (1d) führt man über ein oder mehrere entsprechenden Diphenole der allgemeinen Formeln (1b'), (lc') und (1d') ein: 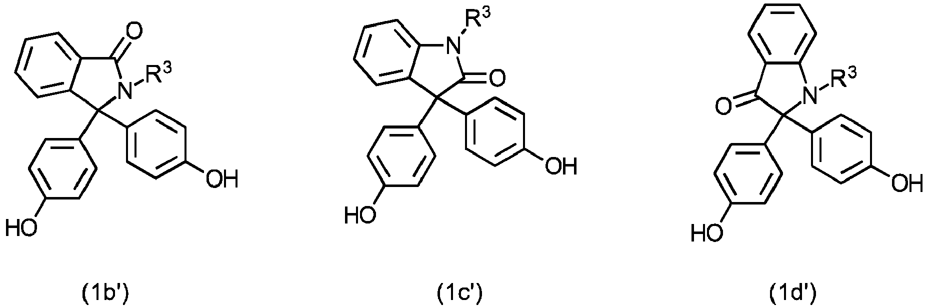 in denen R³ für einen C₁- bis C₄-Alkylrest, Aralkylrest oder Arylrest, bevorzugt für einen Methylrest oder Phenylrest, ganz besonders bevorzugt für einen Methylrest, steht.

Neben einer oder mehreren Monomereinheiten der Formel (1a), (1b), (1c), (1d) und/oder (1e)können die erfindungsgemäß als Stützmaterial eingesetzten Copolycarbonate ein oder mehrere Monomereinheit(en) der Formel (2) aufweisen: 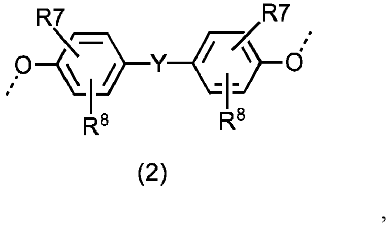 in der
R⁷ und R⁸ unabhängig voneinander für H, einen C₁- bis C₁₈-Alkylrest, einen C₁- bis C₁₈-Alkoxyrest, Halogen wie Cl oder Br oder für jeweils einen gegebenenfalls substituierten Arylrest oder Aralkylrest, bevorzugt für H oder einen C₁- bis C₁₂-Alkylrest, besonders bevorzugt für H oder einen C₁- bis Cs-Alkylrest und ganz besonders bevorzugt für H oder einen Methylrest, stehen, und
Y für eine Einfachbindung, -SO₂-, -CO-, -O-, -S-, einen C₁- bis C₆-Alkylenrest oder C₂- bis C₅-Alkylidenrest, ferner für einen C₆- bis C₁₂-Arylenrest, welches gegebenenfalls mit weiteren Heteroatome enthaltenden aromatischen Ringen kondensiert sein kann, steht.

Die Monomereinheit(en) der allgemeinen Formel (2) führt man über ein oder mehrere entsprechende Diphenole der allgemeinen Formel (2a) ein: 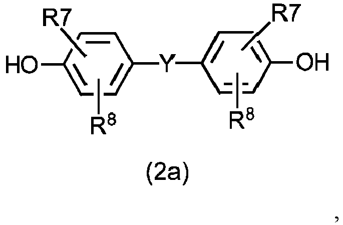 wobei R⁷, R⁸ und Y jeweils die bereits im Zusammenhang mit der Formel (2) erwähnte Bedeutung haben.

Beispielhaft werden für die Diphenole der Formel (2a), die neben den Diphenolen der Formel (1a'), (1b'), (1c') und/oder (1d') eingesetzt werden können, Hydrochinon, Resorcin, Dihydroxybiphenyle, Bis-(hydroxyphenyl)-alkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen und auch α,ω- Bis-(hydroxyphenyl)-polysiloxane genannt.

Bevorzugte Diphenole der Formel (2a) sind beispielsweise 4,4'-Dihydroxybiphenyl (DOD), 4,4'-Dihydroxybiphenylether (DOD-Ether), 2,2-Bis-(4-hydroxyphenyl)-propan (Bisphenol A), 2,4-Bis-(4-hydroxyphenyl)-2-methylbutan, 1,1-Bis-(4-hydroxyphenyl)-1-phenylethan, 1,1-Bis[2-(4-hydroxyphenyl)-2-propyl]-benzol, 1,3-Bis[2-(4-hydroxyphenyl)-2-propyl]-benzol (Bisphenol M), 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 2,2-Bis-(3,5-dichlor-4-hydroxyphenyl)-propan und 2,2-Bis-(3,5-dibrom-4-hydroxyphenyl)-propan.

Besonders bevorzugte Diphenole sind beispielsweise 2,2-Bis-(4-hydroxyphenyl)-propan (Bisphenol A), 4,4'-Dihydroxybiphenyl (DOD), 4,4'-Dihydroxybiphenylether (DOD-Ether), 1,3-Bis[2-(4-hydroxyphenyl)-2-propyl]-benzol (Bisphenol M), 2,2-Bis-(3,5-dimethyl-4-hydroxyphenyl)-propan, 1,1-Bis-(4-hydroxyphenyl)-1-phenylethan, 2,2-Bis-(3,5-dichlor-4-hydroxyphenyl)-propan und 2,2-Bis-(3,5-dibrom-4-hydroxyphenyl)-propan.

Ganz besonders bevorzugt sind Verbindungen der allgemeinen Formel (2b), 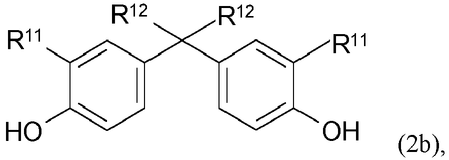 in der
R¹¹ für H, lineare oder verzweigte C₁- bis C₁₀ -Alkylreste, bevorzugt lineare oder verzweigte C₁- bis C₆ -Alkylreste, besonders bevorzugt für lineare oder verzweigte C₁-bis C₄-Alkylreste, ganz besonders bevorzugt für H oder einen C₁-Alkylrest (Methylrest), steht und
R¹² für lineare oder verzweigte C₁- bis C₁₀-Alkylreste, bevorzugt lineare oder verzweigte C₁- bis C₆-Alkylreste, besonders bevorzugt für lineare oder verzweigte C₁- bis C₄-A1-kylreste, ganz besonders bevorzugt für einen C₁-Alkylrest (Methylrest), steht.

Hierbei ist insbesondere das Diphenol (2c) ganz besonders bevorzugt.

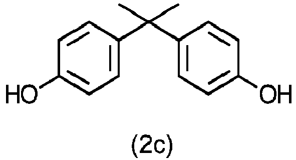

Die Diphenole der allgemeinen Formeln (2a) können sowohl allein als auch im Gemisch miteinander verwendet werden. Die Diphenole sind literaturbekannt oder nach literaturbekannten Verfahren herstellbar.

Der Gesamtanteil der Monomereinheiten der Formeln (1a), (1b), (1c) und (1d) im Copolycarbonat beträgt vorzugsweise 0,1 - 88 mol-%, besonders bevorzugt 1 - 86 mol-%, ganz besonders bevorzugt 5 - 84 mol-% und insbesondere 10 - 82 mol-% (bezogen auf die Summe der Mole eingesetzter Diphenole).

Bevorzugt leiten sich die Diphenolateinheiten der Copolycarbonate gemäß Komponente A von Monomeren mit den allgemeinen Strukturen der oben beschriebenen Formeln (1a'), weiter bevorzugt (la"), und (2a), ganz besonders bevorzugt (2c), ab.

In einer anderen Ausführungsform leiten sich die Diphenolateinheiten der Copolycarbonate gemäß Komponente A von Monomeren mit den allgemeinen Strukturen der oben beschriebenen Formeln (2a) und (1b'), (lc') und/oder (1d') ab.

Ein bevorzugtes Copolycarbonat ist aufgebaut aus 17 bis 62 Gew.-% Bisphenol A und 38 bis 83 Gew.-%, weiter bevorzugt 50 bis 70 Gew.-%, Comonomer der allgemeinen Formel (1b), (1c) und/oder (1d), wobei sich die Mengen von Bisphenol A und Comonomer der allgemeinen Formeln (1b), (1c) und/oder (1d) zu 100 Gew.-% ergänzen.

Der Anteil der Monomereinheiten der Formel (1a), bevorzugt von Bisphenol TMC, im Copolycarbonat beträgt vorzugsweise10 - 95 Gew.-%, weiter bevorzugt 30 bis 85 Gew.-%, besonders bevorzugt 30 bis 67 Gew.-%. Bei 30 Gew.-% und mehr Bisphenol TMC liegt die Vicat-Temperatur (VST/B 120; ISO 306:2013) des Copolycarbonats bei über 175 °C. Dabei wird als Monomer der Formel (2) bevorzugt Bisphenol A eingesetzt, dessen Anteil bevorzugt 15 bis 56 Gew.-%, beträgt. Besonders bevorzugt ist das Copolycarbonat aus den Monomeren Bisphenol TMC und Bisphenol A aufgebaut.

Die erfindungsgemäß als Stützmaterial verwendeten Copolycarbonate weisen gemäß einer weiteren Ausführungsform eine Vicat-Erweichungstemperatur, bestimmt nach ISO 306:2013, von 180 °C bis 218 °C auf.

Die Copolycarbonate können als block- und statistisches Copolycarbonat vorliegen. Besonders bevorzugt sind statistische Copolycarbonate.

Dabei ergibt sich das Verhältnis der Häufigkeit der Diphenolat-Monomereinheiten im Copolycarbonat aus dem Molverhältnis der eingesetzten Diphenole.

Die relative Lösungsviskosität der Copolycarbonate, bestimmt nach ISO 1628-4:1999, liegt bevorzugt im Bereich von = 1,15 - 1,35.

Die gewichtsmittleren Molmassen M_{w} der Copolycarbonate betragen vorzugsweise 15.000 bis 40.000 g/mol, besonders bevorzugt 17.000 bis 36.000 g/mol, ganz besonders bevorzugt 17.000 bis 34.000 g/mol, und werden mittels GPC in Methylenchlorid gegen eine Polycarbonat-Kalibrierung bestimmt.

In dem erfindungsgemäßen Verfahren zur Herstellung dreidimensionaler Zielobjekte wird als Stützmaterial bevorzugt ein Copolycarbonat, welches aus 1,1-Bis(4-hydroxyphenyl)-3,3,5-trimethyl-cyclohexan (Bisphenol TMC) und 2,2-Bis(4-hydroxyphenyl)propan (Bisphenol A) gebildet ist, verwendet.

"Als Druckmaterial verwendet" umfasst nicht nur die Verwendung der reinen Polymere als solche, sondern auch von Polymer-Zusammensetzungen, die eines dieser Polymere als überwiegend vorhandene Komponente enthalten. Unter "überwiegend vorhanden" werden hierbei solche Zusammensetzungen verstanden, welche mindestens 50 Gew.-% des zuvor genannten Polymers, bevorzugt mindestens 60 Gew.-%, besonders bevorzugt mindestens 75 Gew.-%, ganz besonders bevorzugt mindestens 85 Gew.-% des zuvor genannten Polymers enthalten. Derartige Polymer-Zusammensetzungen enthalten üblicherweise noch übliche Additive.

Solche Additive, wie sie üblicherweise bei Polycarbonaten zugesetzt werden, sind insbesondere Antioxidantien, Entformungsmittel, Flammschutzmittel, UV-Absorber, IR-Absorber, Antistatika, optische Aufheller, Lichtstreumittel, Schlagzähmodifikatoren, Farbmittel wie organische oder anorganische Pigmente, thermisch leitfähige Additive, Thermostabilisatoren und/oder Additive zur Lasermarkierung.

Die erfindungsgemäß eingesetzten Stützmaterialien lassen sich in aromatischen Kohlenwasserstoffen auflösen. Besonders gut eignen sich einfach- und mehrfach methylierte aromatische Kohlenwasserstoffe wie z.B. Toluol, Xylol und/oder Mesitylen. Außerdem können cyclische Ether wie z.B. Tetrahydrofuran (THF) sowie Ester wie Ethylacetat zum Auflösen des Stützmaterials verwendet werden. Zum Auflösen des Stützmaterials können auch Lösungsmittelgemische, z.B. ein Lösungsmittelgemisch aus 2,5 bis 10 Gew.-% 1,3,5-Trimethylbenzol, 0,5 bis 2,5 Gew-% Cumol, 25 bis 50 Gew.-% 2-Methoxy-1-methylethylacetat, 10 bis 25 Gew.-% 1,2,4-Trimethylbenzol, < 0,5 Gew.-% 2-Methoxypropylacetat, 25 bis 50 Gew.-% Ethyl-3-ethoxypropionat und 10 bis 25 Gew.-% Naphtha; oder allgemein Lösungsmittel aus der Gruppe der aromatischen Kohlenwasserstoffe verwendet werden.

Es wird zum Auflösen des Stützmaterials bevorzugt Butylacetat, Ethylacetat, 2-Methoxy-1-methylethylacetat, Methoxypropylacetat, Ethyl-3-ethoxypropionat, Tetrahydrofuran, Xylol, Mesitylen, Cumol, Trimethylbenzol, Benzol, Toluol, Dioxan, Tetrahydropyran oder eine Mischung enthaltend mindestens zwei der vorgenannten Lösungsmittel verwendet.

Die Auflösung des Stützmaterials erfolgt bevorzugt unter gegenüber Raumtemperatur erhöhter Temperatur, insbesondere bei einer Lösungsmitteltemperatur von 50 bis 80 °C.

Die Auflösung des Stützmaterials erfolgt bevorzugt unter Einwirkung von Ultraschall, da hierdurch der Auflöseprozess beschleunigt wird. Bevorzugt wird eine Kombination aus Ultraschall und erhöhter Temperatur verwendet.

Neben dem erfindungsgemäßen Verfahren ist Gegenstand der Erfindung auch ein Formteil, welches
a) eine Vielzahl von Schichten, enthaltend Copolycarbonat, enthaltend
   eine oder mehrere Monomereinheiten der Formeln (1a), (1b), (1c), (1d) 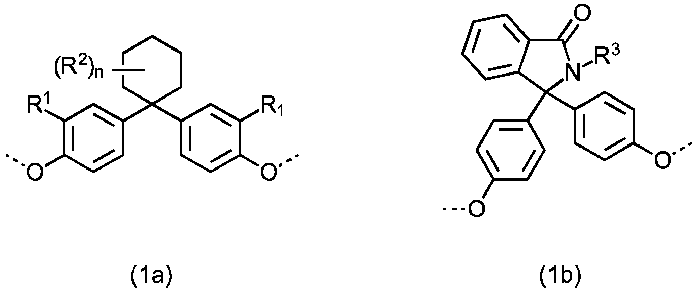 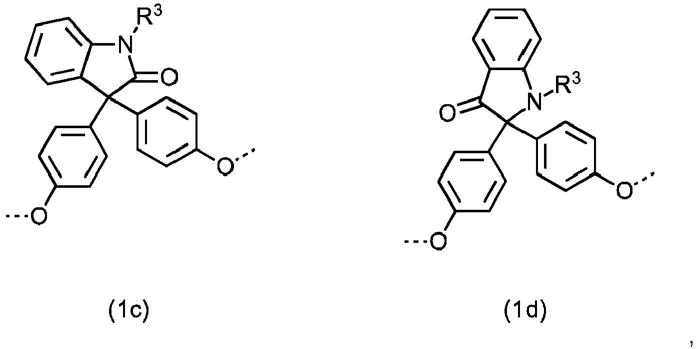 in denen
   R¹ für Wasserstoff oder einen C₁- bis C₄-Alkylrest, bevorzugt für Wasserstoff, steht,
   R² für einen C₁- bis C₄-Alkylrest, bevorzugt Methylrest, steht,
   n für 0, 1, 2 oder 3, bevorzugt 3, steht,
   R³ für einen C₁- bis C₄-Alkylrest, Aralkylrest oder Arylrest, bevorzugt für einen Methylrest oder Phenylrest, ganz besonders bevorzugt für einen Methylrest, steht,
   und/oder der Formel (1e) 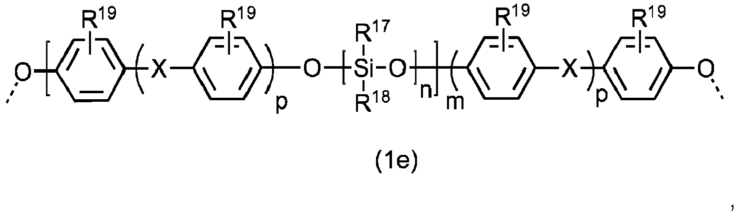 in der
   R¹⁹ für Wasserstoff, Cl, Br oder einen C₁- bis C₄-Alkylrest, vorzugsweise für Wasserstoff oder einen Methylrest, und besonders bevorzugt für Wasserstoff, steht,
   R¹⁷ und R¹⁸ gleich oder verschieden sind und unabhängig voneinander für einen Arylrest, einen C₁- bis C₁₀-Alkylrest oder einen C₁- bis C₁₀-Alkylarylrest, bevorzugt jeweils für einen Methylrest, stehen und wobei
   X eine Einfachbindung, -CO-, -O-, ein C₁- bis C₆-Alkylenrest, ein C₂- bis Cs-Alkylidenrest, ein C₅- bis C₁₂-Cycloalkylidenrest oder ein C₆- bis C₁₂-Arylenrest ist, der optional mit weiteren aromatischen Ringen kondensiert sein kann, welche Heteroatome enthalten, wobei X bevorzugt eine Einfachbindung, ein C₁- bis Cs-Alkylenrest, ein C₂- bis Cs-Alkylidenrest, ein C₅- bis C₁₂-Cycloalkylidenrest, -O- oder -CO- ist, weiter bevorzugt eine Einfachbindung, ein Isopropylidenrest, ein C₅- bis C₁₂-Cycloalkylidenrest oder -O- ist, ganz besonders bevorzugt ein Isopropylidenrest, ist,
   n eine Zahl von 1 bis 500, vorzugsweise von 10 bis 400, besonders bevorzugt von 10 bis 100, ganz besonders bevorzugt von 20 bis 60, ist,
   m eine Zahl von 1 bis 10, bevorzugt von 1 bis 6, besonders bevorzugt von 2 bis 5, ist,
   p 0 oder 1, bevorzugt 1, ist,
   und der Wert von n mal m vorzugsweise zwischen 12 und 400, weiter bevorzugt zwischen 15 und 200, liegt,
   und
b) eine Vielzahl von Schichten, enthaltend ein Poly(etherketonketon), Poly(etheretheretherketon), Poly(etheretherketonketon), Poly(etherketonetherketonketon), Polyarylensulfon, Polybisphenylulfon, Polyethersulfon, Polyphenylensulfon, Polysulfon, Polyetherimid, Polyetherimid-Polycarbonat-Blend oder ein Blend enthaltend mindestens zwei der vorgenannten Polymere aufweist.

Vorzugsweise beträgt die Vicat-Temperatur (VST/B120) des Copolycarbonats, bestimmt nach ISO 306:2013, mindestens 150 °C, bevorzugt mehr als 150 °C, weiter bevorzugt mindestens 175 °C, besonders bevorzugt mindestens 200 °C.

Dieses Formteil ist ein Zwischenprodukt im Verfahren zur Herstellung des dreidimensionalen Zielobjektes, nämlich das Erzeugnis, das durch Drucken des Druckmaterials und des Stützmaterials erhalten wird und von dem in einem nächsten Schritt das Stützmaterial abzutrennen ist, vorzugsweise durch Auflösen.

Hinsichtlich weiterer Details des Materials wird zur Vermeidung von unnötigen Wiederholungen auf die Ausführungen zum erfindungsgemäßen Verfahren verwiesen.

## Patentansprüche

1. Verfahren zur Herstellung eines dreidimensionalen Ziel Objektes mittels additiver Fertigung unter Verwendung eines Druckmaterials und eines Stützmaterials, wobei ein Lösungsmittel zum Entfernen des Stützmaterials verwendet wird, **dadurch gekennzeichnet, dass** als Stützmaterial eine Zusammensetzung auf Basis eines Copolycarbonats verwendet wird, welches eine Vicat-Temperatur (VST/B120), bestimmt nach ISO 306:2013, von mindestens 150 °C aufweist,
und wobei
das Copolycarbonat eine oder mehrere Monomereinheiten
der Formel (1a), 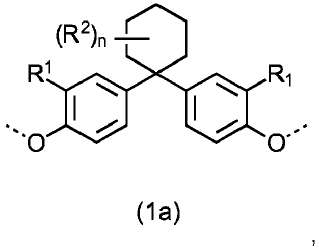 in der
R¹ für Wasserstoff oder einen C₁-bis C₄-Alkylrest steht,
R² für einen C₁- bis C₄-Alkylrest steht,
n für 0, 1, 2 oder 3 steht,
(1b), (1c) und/oder (1d) 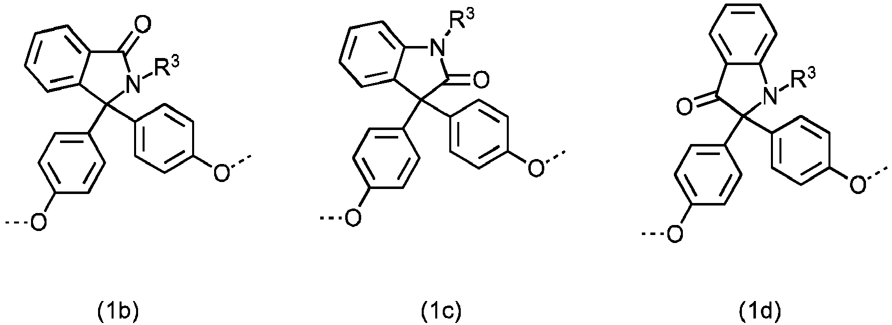 ,
in denen
R³ für einen C₁- bis C₄-Alkylrest, Aralkylrest oder Arylrest steht,
und/oder
der Formel (1e) 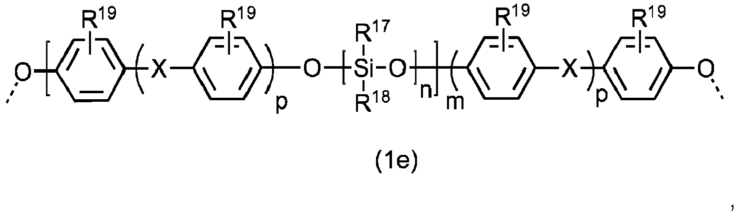 in der
R¹⁹ für Wasserstoff, Cl, Br oder einen C₁- bis C₄-Alkylrest steht,
R¹⁷ und R¹⁸ gleich oder verschieden sind und unabhängig voneinander für einen Arylrest, einen C₁- bis C₁₀-Alkylrest oder einen C₁- bis C₁₀-Alkylarylrest stehen und wobei
X eine Einfachbindung, -CO-, -O-, ein C₁- bis C₆-Alkylenrest, ein C₂- bis Cs-Alkylidenrest, ein C₅- bis C₁₂-Cycloalkylidenrest oder ein C₆- bis C₁₂-Arylenrest ist, der optional mit weiteren aromatischen Ringen kondensiert sein kann, welche Heteroatome enthalten, ist,
n eine Zahl von 1 bis 500 ist,
m eine Zahl von 1 bis 10 ist,
p 0 oder 1 ist,
enthält,
und wobei als Druckmaterial ein Poly(etherketonketon), Poly(etheretheretherketon), Poly(etheretherketonketon), Poly(etherketonetherketonketon), Polyarylensulfon, Polybisphenylulfon, Polyethersulfon, Polyphenylensulfon, Polysulfon, Polyetherimid, Polyetherimid-Polycarbonat-Blend oder ein Blend enthaltend mindestens zwei der vorgenannten Polymere verwendet wird.

2. Verfahren nach Anspruch 1, **dadurch gekennzeichnet, dass** die additive Fertigung ein Fused Deposition Modeling-Verfahren ist.

3. Verfahren nach Anspruch 1 oder 2, **dadurch gekennzeichnet, dass** als Lösungsmittel Butylacetat, Ethylacetat, 2-Methoxy-1-methylethylacetat, Methoxypropylacetat, Ethyl-3-ethoxypropionat, Tetrahydrofuran, Xylol, Mesitylen, Cumol, Trimethylbenzol, Benzol, Toluol, Dioxan, Tetrahydropyran oder eine Mischung enthaltend mindestens zwei der vorgenannten Lösungsmittel verwendet wird.

4. Verfahren nach einem der vorhergehenden Ansprüche, **dadurch gekennzeichnet, dass** das Copolycarbonat eine oder mehrere Monomereinheiten der Formel (1a) 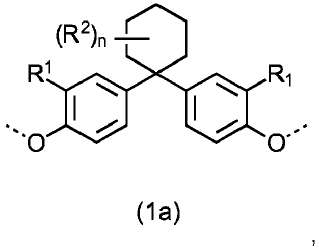 in der
R¹ für Wasserstoff oder einen C₁-bis C₄-Alkylrest steht,
R² für einen C₁- bis C₄-Alkylrest steht,
n für 0, 1, 2 oder 3 steht;
enthält.

5. Verfahren nach einem der vorhergehenden Ansprüche, **dadurch gekennzeichnet, dass** das Copolycarbonat aus den Monomeren 1,1-Bis(4-hydroxyphenyl)-3,3,5-trimethylcyclohexan und 2,2-Bis(4-hydroxyphenyl)propan hergestellt ist.

6. Verfahren nach einem der vorhergehenden Ansprüche, **dadurch gekennzeichnet, dass** das Copolycarbonat eine Vicat-Temperatur (VST/B120), bestimmt nach ISO 306:2013, von mindestens 200 °C aufweist.

7. Verfahren gemäß einem der vorhergehenden Ansprüche, **dadurch gekennzeichnet, dass** das Stützmaterial bei einer Lösungsmitteltemperatur von 50 bis 80 °C entfernt wird.

8. Verfahren gemäß einem der vorhergehenden Ansprüche, **dadurch gekennzeichnet, dass** die Entfernung des Stützmaterials unter Einwirkung von Ultraschall erfolgt.

9. Verfahren gemäß einem der vorhergehenden Ansprüche, **dadurch gekennzeichnet, dass** als Druckmaterial ein Material verwendet wird, welches eine Verarbeitungstemperatur von mindestens 330 °C aufweist.

10. Formteil, welches
a) eine Vielzahl von Schichten, enthaltend Copolycarbonat, enthaltend
eine oder mehrere Monomereinheiten der Formeln (1a), (1b), (1c), (1d) 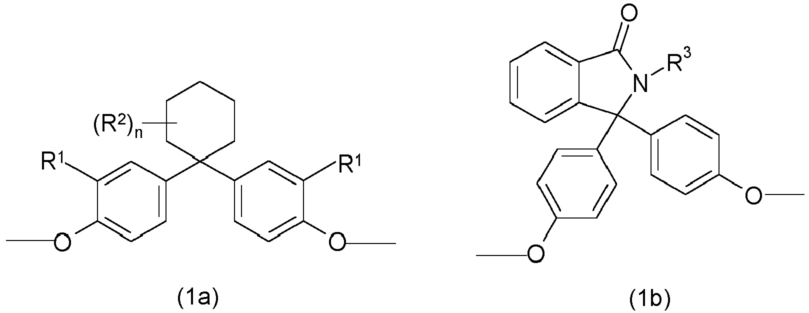 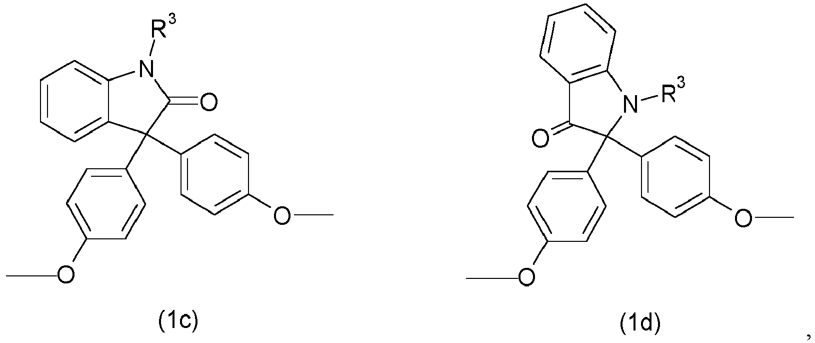 in denen
R¹ für Wasserstoff oder einen C₁- bis C₄-Alkylrest steht,
R² für einen C₁- bis C₄-Alkylrest steht,
n für 0, 1, 2 oder 3 steht,
R³ für einen C₁- bis C₄-Alkylrest, Aralkylrest oder Arylrest steht,
und/oder eine oder mehrere der Monomereinheiten (1e) 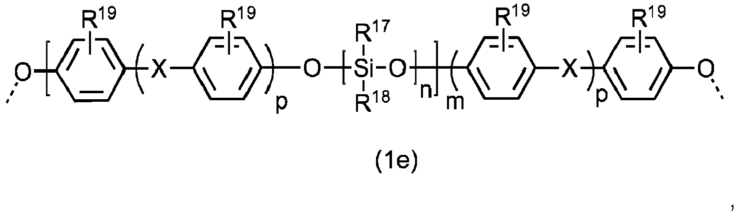 in der
R¹⁹ für Wasserstoff, Cl, Br oder einen C₁- bis C₄-Alkylrest steht,
R¹⁷ und R¹⁸ gleich oder verschieden sind und unabhängig voneinander für einen Arylrest, einen C₁- bis C₁₀-Alkylrest oder einen C₁- bis C₁₀-Alkylarylrest, stehen und wobei
X eine Einfachbindung, -CO-, -O-, ein C₁- bis C₆-Alkylenrest, ein C₂- bis Cs-Alkylidenrest, ein C₅- bis C₁₂-Cycloalkylidenrest oder ein C₆- bis C₁₂-Arylenrest ist, der optional mit weiteren aromatischen Ringen kondensiert sein kann, welche Heteroatome enthalten, ist,
n eine Zahl von 1 bis 500 ist,
m eine Zahl von 1 bis 10 ist,
p 0 oder 1 ist,
und
b) eine Vielzahl von Schichten, enthaltend ein Poly(etherketonketon), Poly(etheretheretherketon), Poly(etheretherketonketon), Poly(etherketonetherketonketon), Polyarylensulfon, Polybisphenylulfon, Polyethersulfon, Polyphenylensulfon, Polysulfon, Polyetherimid, Polyetherimid-Polycarbonat-Blend oder ein Blend enthaltend mindestens zwei der vorgenannten Polymere aufweist.
